(19) Europäisches Patentamt
European Patent Office
Office européen des brevets

(11) **EP 2 484 019 B1**

(12) **EUROPÄISCHE PATENTSCHRIFT**

(45) Veröffentlichungstag und Bekanntmachung des Hinweises auf die Patenterteilung:
**25.03.2015 Patentblatt 2015/13**

(21) Anmeldenummer: **10767967.2**

(22) Anmeldetag: **30.09.2010**

(51) Int Cl.:
*H04B 3/56* (2006.01)        *H04B 3/54* (2006.01)
*H02M 5/293* (2006.01)

(86) Internationale Anmeldenummer:
**PCT/EP2010/064613**

(87) Internationale Veröffentlichungsnummer:
**WO 2011/039334 (07.04.2011 Gazette 2011/14)**

(54) **VERFAHREN ZUR DATENÜBERTRAGUNG VON EINEM SENDER ZU EINEM EMPFÄNGER IN EINEM WECHSELSPANNUNGSNETZ SOWIE VORRICHTUNG ZUR DATENÜBERTRAGUNG FÜR WECHSELSPANNUNGSNETZE**

Method for transmitting data from a transmitter to a receiver in an alternating current network and device for transmitting data for alternating current networks

Procédé de transmission de données d'un émetteur vers un récepteur dans un réseau de tension alternative ainsi que dispositif de transmission de données pour réseaux de tension alternative

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.09.2009   DE 202009013154 U**
**30.09.2009   DE 202009013152 U**
**09.04.2010   EP 10159540**
**12.04.2010   DE 202010004850 U**
**21.04.2010   DE 202010005953 U**

(43) Veröffentlichungstag der Anmeldung:
**08.08.2012   Patentblatt 2012/32**

(73) Patentinhaber: **Aizo group ag**
**8952 Schlieren (CH)**

(72) Erfinder:
• **BRÖCKMANN, Eckhard**
**35418 Buseck (DE)**
• **BECK, Wilfried**
**65193 Wiesbaden (DE)**
• **KEMMLER, Wolfgang**
**CH-8952 Schlieren (CH)**
• **DECKERS, Volker**
**CH-8052 Zürich (CH)**

(74) Vertreter: **Hepp Wenger Ryffel AG**
**Friedtalweg 5**
**9500 Wil (CH)**

(56) Entgegenhaltungen:
EP-A1- 1 641 178        WO-A1-2005/036374
DE-A1- 3 329 049        FR-A1- 2 401 563
FR-A1- 2 635 424        US-A1- 2009 015 319

**Beschreibung**

Die vorliegende Erfindung betrifft ein Verfahren zur Datenübertragung von einem Sender zu einem Empfänger in einem Wechselspannungsnetz sowie Vorrichtung hierfür.

Aus dem Stand der Technik sind verschiedene Verfahren zur Datenübertragung in einem Wechselspannungsnetz bekannt. So beschreibt beispielsweise US5491463 ein Power Line Communication (PLC) Verfahren zum individuellen Ansteuern von Geräten, wobei Adress- und Steuerdaten während der Nulldurchgänge der Versorgungs-Wechselspannung übertragen werden. Von Nachteil ist dabei, dass bei diesem Verfahren jeweils ein eigener 120kHz-Generator erforderlich ist, um Burst-Signale zu erzeugen und der Empfänger mit vergleichsweise aufwendigen Detektor-Schaltungen ausgestattet sein muss. Ausserdem sind grosse Parallelkapazitäten für eine optimale Übertragung schädlich.

Aus EP1134910A2 ist ein Verfahren bekannt, das über verschieden lange Nullschaltungen oder Austastungen der Versorgungsspannungen verschiedene Bit-Arten definiert und es dem Empfänger mit einer einfachen Schaltung ermöglicht, die Bit-Arten zu detektieren und die jeweiligen Steuerinformationen auszuwerten. Bei diesem Datenübertragungsverfahren ist es technisch möglich, Informationen an mehrere, an eine gemeinsame Wechselspannungsversorgung angeschlossene Verbraucher zu übertragen, indem um den Nulldurchgang der Spannung eine Leitungsunterbrechung bzw. Austastung erfolgt. Systembedingt dürfen die Verbraucher hierbei jedoch keine induktiven oder kapazitiven Lastanteile besitzen, da diese die beschriebene Spannungsaustastung im Nulldurchgang der Spannungskurve stören würden.

WO2006034866A1 beschreibt ein Verfahren zur Modulation der Wirkleistung bei einem oder mehreren Verbrauchern in einem Wechselspannungsenergieversorgungsnetz zwecks Übermittlung von Informationen über die Energieversorgungsleitung durch gezielt variierte Wirkleistung im angeschlossenen Verbraucher. Zur Übermittlung der Informationen werden Variationen des Momentanwertes der Wirkleistung auf ein beliebiges Mass (Vergrösserung oder Verkleinerung) durchgeführt, die von einem Sender in die Wechselstromenergieversorgungsleitung eingeprägt wird und von einem Empfänger ausgewertet werden. Dieses Verfahren erzwingt einen hohen technischen Aufwand im Modulator.

In EP1675274A1 wird ein Verfahren zur Datenübertragung durch Modulation in einem Wechselspannungsnetz mit mehreren angeschlossenen Verbrauchern gezeigt. Dabei werden Blindstromanteile in einer Energieversorgungsleitung eines Wechselspannungsnetzes von einer speziellen elektronischen Schaltung, durch Aufschalten einer speziellen Last abgeleitet. Ein solches Verfahren ist jedoch nur im Hinkanal, also vom Verteiler in Richtung zum Verbraucher möglich.

Es ist Aufgabe der Erfindung, die Nachteile des Standes der Technik zu überwinden. Insbesondere soll ein einfach zu realisierendes Verfahren zur Datenübertragung im Rückkanal, sowie eine entsprechende Vorrichtung zur Verfügung gestellt werden.

Diese Aufgabe wird durch das in den unabhängigen Patentansprüchen 1 und 15 definierten Verfahren sowie durch die im den unabhängigen Patentansprüchen 6 und 12 definierten Vorrichtungen gelöst. Weitere Ausführungsformen ergeben sich aus den abhängigen Patentansprüchen.

Hier und im Folgenden wird unter einem Rückkanal ein Kanal zur Datenübertragung in einem Wechselspannungsnetz von der Seite eines Verbrauchers, insbesondere von einem Endverbraucher in Richtung zur Wechselspannungsquelle verstanden. Entsprechend wird unter einem Hinkanal ein Übertragungskanal in Gegenrichtung, also in Richtung zum Verbraucher verstanden.

Eine Verbrauchergruppe im vorliegenden Sinne ist in einem Gebäudestromnetz ausgehend vom Netzzugang derjenige Anteil des Gebäudestromnetzes, welcher vom Verteiler abzweigt und zu einem oder mehreren Verbrauchern führt. Beispielsweise umfasst eine Verbrauchergruppe alle Netzsteckdosen sowie die Lampen eines Raumes. Meist verfügt jede Verbrauchergruppe über eine eigene Sicherung, so dass im Schadensfall nur ein Netzausfall in der entsprechenden Verbrauchergruppe auftritt und nicht das gesamte Gebäude vom Netz getrennt wird. Der Begriff Gebäudestromnetz ist dabei als Synonym für Gebäudestromnetze und ähnliche Verkabelungen, insbesondere auch für Bordnetze in Fahrzeugen, Eisenbahnen, Schiffen und Flugzeugen zu verstehen. Hier und im Folgenden wird unter einer Wechselspannungsnetz ein elektrisches Netzwerk verstanden, welches innerhalb einer abgeschlossenen Einheit, beispielsweise innerhalb eines Hauses, einer Wohnung, eines Gebäudes, eines Fahrzeuges, eines Eisenbahnzuges, eines Schiffes, eines Flugzeugs, usw., die Energieversorgung unterschiedlicher Geräte mittels einer drahtgebundenen Wechselspannung sicherstellt. Entsprechend wird unter einer Wechselspannungsquelle ein Generator, eine Trafostation, eine Umspannstation, ein Wechselrichter einer Photovoltaikanlage, usw. verstanden. Dabei kann die Wechselspannungsversorgung auch nur für die Zwecke der Datenübertragung genutzt werden.

Unter einem Sender wird im Folgenden eine Vorrichtung verstanden, welche ein Signal einem Übertragungsmedium, im vorliegenden Fall einer Zwei- bzw. Dreidrahtleitung eines Wechselstromnetzes übergibt, so dass dieses Signal von einem entsprechenden Empfänger aufgenommen werden kann. Obwohl im vorliegenden Fall immer die Begriffe Sender und Empfänger verwendet werden, kann ein Sender neben seiner Sendefunktionalität auch über Mittel verfügen, so dass auch der Sender Signale empfangen kann. Entsprechend kann auch der Empfänger so ausgestaltet sein, dass dieser Signale sendet bzw. dem Übertragungsmedium übergibt. Durch diese Funktionalität kann nicht nur eine Datenübertragung in eine Richtung erfolgen, sondern es ist eine bidirektionale Kommunikation möglich. In herkömmlichen Gebäudestromnetzen ist jedoch mit der vorliegenden Erfindung nur ein Senden bzw. Empfangen in einer Richtung möglich. Insbesondere weil der Empfänger im Wesentlichen aus einem Widerstand besteht, muss dieser Widerstand in den Stromkreis eingeschleift werden, was lastseitig nicht möglich ist. Falls eine bidirektionale Kommunikation ermöglicht werden soll, kann die vorliegende Erfindung mit einem anderen Sende-Empfangs-Verfahren kombiniert werden.

Hier und im Folgenden wird unter Strom-FSK-Modulation eine Signalmodulation verstanden, welche ähnlich der bekannten Frequency Shift Keying Modulation (FSK-Modulation) ist, jedoch an Stelle einer Spannung einen Strom moduliert. Ausserdem weist das Frequenzsignal nicht unbedingt eine reine Sinus-Form auf und wird nicht um den Nullpunkt moduliert. Das Signal ist vielmehr einer $\sin^2$-Form oder einer Gaussform angenähert und schwingt damit nicht um den Nullpunkt sondern um Vpp/2. Entsprechend wird unter einem Strom-FSK-Modulator eine Vorrichtung verstanden, welche ein Signal mittels Strom-FSK-Modulation moduliert. Ausserdem soll auch Continuous Phase FSK als Variante der FSK unter dem Begriff FSK verstanden werden.

Im Folgenden wird der Begriff nah so verstanden, dass er in Relation zu einer Länge der Wechselstromleitung einer Verbrauchergruppe betrachtet werden soll. Solche Wechselstromleitungen in einer Hausinstallation können bis zu ca. 100m betragen. Der Begriff nah ist dabei so zu verstehen, dass er einige cm bis zu 50cm umfasst.

In einem erfindungsgemässen Verfahren zur Datenübertragung von einem Sender zu einem Empfänger in einem Wechselspannungsnetz speist der Sender mittels einer Stromquelle dem Wechselspannungsnetz ein Signal ein. Dabei umfasst das Wechselspannungsnetz einen Verteiler und mindestens eine Verbrauchergruppe mit einem oder mehreren Verbrauchern. Dadurch, dass das Signal mittels einer Stromquelle eingespeist wird und somit als Stromsignal dem Wechselspannungsnetz aufgezwungen wird, kann eine sehr einfache Detektion des Signales erfolgen. Ausserdem erlaubt dies eine Einspeisung, welche unabhängig von der Phasenlage der Wechselspannung ist, da keine Spannungswerte berücksichtigt werden müssen. Einzig im Nulldurchgang der Netzspannung kann nicht gesendet werden, da hier keine Spannung zur Verfügung steht. Es hat sich als vorteilhaft erwiesen, wenn die Stromimpulse mit dem Nulldurchgang der Netzspannung synchronisiert werden. Somit kann auf eine komplizierte Erkennung des Anfangs eines Signals bzw. eines Bits verzichtet werden, ohne dass die Störsicherheit des Systems beeinträchtigt wird. Der Empfänger weiss genau, wann ein Signal zu erwarten ist. Insbesondere können über einen Timer bestimmte Sendefenster definiert werden. Mit dem Nulldurchgang der Netzspannung steht also ein Mittel zur Verfügung, welches eine genaue Synchronisation von Sender und Empfänger erlaubt.

In einem 230V Wechselspannungsnetz kann die Stromquelle beispielsweise einen Strom von 200mA liefern. Es versteht sich von selbst, dass auch andere Stromwerte benutzt werden können. Dabei ist die Sendeleistung von den für eine Produktklasse erforderlichen Grenzwerten bezüglich der leitungsgebundenen elektromagnetischen Energien, von der maximal zulässigen Verlustleistung über den Sendetransistor sowie der Dauer der Kommunikation abhängig. Ebenso ist auch eine Anwendung im 115/120V Wechselspannungsnetz möglich.

Durch die Stromquelle kann ein zusätzlicher Verbraucher simuliert werden. Ein zusätzlicher normaler Verbraucher zwingt dem Wechselspannungsnetz ebenfalls ein zusätzliches Stromsignal auf. Der Netzbetreiber kann somit nicht unterscheiden, ob das zusätzliche Stromsignal von einem für die Datenübertragung eingesetzten Sender herrührt oder ob es sich um einen zusätzlichen normalen Verbraucher handelt. Somit sind erheblich weniger Normen und Regelungen einzuhalten, als wenn aktiv eine Sendesignaleinspeisung analog zum PLC-Verfahren erfolgen würde.

Im Prinzip kann mit diesem Verfahren ein Signal von ca. 3kHz bis ca. 10MHz übertragen werden. Selbstverständlich ist dies jedoch abhängig von der Bandweite der eingesetzten Bauteile, insbesondere Transistoren und den jeweils zu berücksichtigenden gültigen Vorschriften. Es bietet sich insbesondere an, dieses Verfahren im Cenelec "B" Band zu verwenden, also in einem Bereich von 85-120kHz, weil es dort auch mit anderen spannungsgetriebenen Verfahren koexistieren kann und bezüglich Leitungsdämpfung einen guten Kompromiss eingeht. Bei optimaler Gestaltung eines Saugkreises ist auch dessen Grösse und Effizienz im obigen Frequenzbereich optimal. Es sind jedoch auch Anwendungen im Bereich 8-25kHz denkbar.

Es hat sich als vorteilhaft erwiesen, wenn das Signal im Sender strom-FSK-moduliert wird. Es hat sich gezeigt, dass bei einer Strom-FSK-Modulation die Fehlerwahrscheinlichkeit verringert ist. Wie schon erwähnt ist die Pulsform der Strom-FSK-Modulierung dabei einer $\sin^2$-Form oder eine Gaussform bestmöglich angenähert. Somit kann das aus der Strom-FSK-Modulierung resultierende Oberwellenspektrum möglichst nahe am theoretischen Minimum liegen. Dies hat wiederum den Vorteil, dass die maximale Sendeenergie im Empfänger, der möglichst scharf die Sendefrequenzen herausfiltert, nutzbar gemacht wird. Ausserdem wird damit die abgestrahlte HF-Energie ausserhalb der erlaubten Frequenzbänder stark limitiert und kann einfacher innerhalb der gesetzlich vorgeschriebenen Grenzen gehalten werden. Es versteht sich von selbst, dass auch andere Modulationsarten, beispielsweise ein Pulslageverfahren, wo ein Bit durch eine Pulsgruppe an einer bestimmten zeitlichen Position signalisiert wird oder ein Einzelpulsverfahren bzw. Pulslängenkodierung, wo ein Puls einem Bit oder mehreren Bits entspricht, eingesetzt werden können.

Ein Stromverlauf mit einem modulierten Signal weist innerhalb mindestens eines Zeitfensters eine gezielte Überlagerung des allgemeinen Stromverlaufs auf. Dabei weist das Zeitfenster einen definierten zeitlichen Abstand vom Nulldurchgang der Wechselspannung einer Wechselspannungsquelle auf. Das Datensignal ist in der Modulation des gezielt eingeprägten Stroms enthalten. Das Datensignal kann dabei auf verschiedene Art moduliert sein, vorzugsweise durch FSK. Die Flanken der Modulation können einer vorgegebenen oder vorgebbaren Pulsform entsprechen. Somit kann erreicht werden, dass die Datenübertragung im Wechselspannungsnetz bezüglich Ihrer EMV optimiert ist. Es hat sich als vorteilhaft erwiesen, wenn die Flanken einer $\sin^2$-Kurve oder eine Gausskurve angenähert sind. Andere Flankenformen sind ebenfalls denkbar.

Das Signal kann nahe am oder im Verbraucher eingespeist werden. Durch eine möglichst nahe am Verbraucher angeordnete Einspeisung, insbesondere wenn die Einspeisung direkt im Verbraucher integriert ist, entfallen Verbindungsleitungen vom Verbraucher zum Sender. Dies ist insbesondere dann vorteilhaft, wenn der Sender einen Statusreport über den Zustand des Verbrauchers an den Empfänger übermitteln soll. Insbesondere kann somit direkt überprüft werden, ob der Status des Verbrauchers einem Status entspricht, der dem Verbraucher vorgängig mit einem bestimmten Befehl angegeben worden ist. Weitere Informationen, die auf diesem Weg kommuniziert werden können sind beispielsweise Identifikationsnummern oder Strom-/Energieverbrauchswerte.

Der Sender und der Empfänger können mit Hilfe des Nulldurchganges der Wechselspannung synchronisiert werden. Dadurch, dass sowohl Sender als auch Empfänger auf den Sinus der Wechselspannung synchronisiert sind, wird die Erkennung des Anfangs eines Bits und somit eines Daten-Telegrams sehr einfach. Über Timer können definierte Sendefenster bestimmt werden. Da mit dem Sinussignal der Wechselspannung ein präzises Synchronisationssignal im gesamten Kommunikationssystem zur Verfügung steht, lassen sich Sender und Empfänger immer perfekt aufeinander synchronisieren. Das Empfangen der Sendebits wird somit vereinfacht und die Störsicherheit des Systems gleichzeitig erhöht.

Das Einspeisen des Signals kann unabhängig von einem Nulldurchgang der Wechselspannung erfolgen. Theoretisch könnte ununterbrochen, d.h. über die gesamte Phasenlage der Wechselspannung gesendet werden, was zu einer wesentlich höheren Datenübertragungsrate im Vergleich zu anderen Verfahren, welche nur im Nulldurchgang senden können, führen kann. Allerdings kann natürlich nur so lange ein Stromverbrauch stimuliert werden, wie auch eine entsprechende Spannung zur Verfügung steht. Dies bedeutet, dass sehr nahe am Nulldurchgang kein ausreichender Stromimpuls erzeugt werden kann. Im Unterschied hierzu kann ein spannungsgetriebenes PLC-System auch während dem Nulldurchgang aus einem Kondensator Energie ziehen, um Spannungsimpulse gegen die Quellimpedanz einzuprägen.

Dadurch, dass das Signal mittels einer Stromquelle eingespeist wird und somit als Stromsignal dem Wechselspannungsnetz aufgezwungen wird, kann eine sehr einfache Detektion des Signales erfolgen. Eine solche Detektion kann beispielsweise durch einen Shunt erfolgen. Über einem solchen Shunt oder Widerstand wird also eine Spannung abfallen, welche proportional zum von der Stromquelle aufgezwungenen Strom des Wechselspannungsnetzes ist. Der Empfänger kann somit das Signal einfach mittels eines Shunts aus dem Wechselspannungsnetz auslesen. Um unabhängig von der Höhe des Stromsignals eine Auswertung der Daten zu ermöglichen, kann nach dem Auslesen durch den Shunt das Signal einer automatischen Verstärkungsregelung zugeführt werden. Ausserdem kann es vorteilhaft sein, wenn ausserhalb eines definierten Empfangsfensters ein Blanking im Empfänger erfolgt, damit der Empfänger nicht durch Störungen, welche sich auf dem Wechselspannungsnetz ausbreiten, geblendet oder übersteuert wird.

Das Signal kann dabei nahe dem Verteiler ausgelesen werden.

Eine erfindungsgemässe Anordnung zur Datenübertragung für Wechselspannungsnetze umfasst ein Wechselspannungsnetz mit einem Verteiler und mindestens einer Verbrauchergruppe mit einem oder mehreren Verbrauchern, mindestens einen Sender und einen Empfänger. Der Sender ist dabei so ausgestaltet, dass er eine Stromquelle zur Einspeisung eines Signals in das Wechselspannungsnetz umfasst.

Der Sender kann dabei im Verbraucher integriert oder nahe am Verbraucher angeordnet sein.

Durch eine möglichst nahe am Verbraucher angeordnete Einspeisung, insbesondere wenn die Einspeisung direkt im Verbraucher integriert ist, entfallen Verbindungsleitungen vom Verbraucher zum Sender. Vorzugsweise ist der Sender direkt im Verbraucher integriert, beispielsweise an seinem Netzeingang. Dies ist insbesondere dann vorteilhaft, wenn der Sender einen Statusreport über den Zustand des Verbrauchers und andere mit dem Verbraucher korrespondierende Informationen an den Empfänger übermitteln soll. Insbesondere kann somit direkt überprüft werden, ob der Status des Verbrauchers einem Status entspricht, der dem Verbraucher vorgängig mit einem bestimmten Befehl angegeben worden ist.

Der Sender kann einen Strom-FSK-Modulator umfassen. Entsprechend muss natürlich auch der Empfänger über einen Strom-FSK-Demodulator verfügen, so dass eine einwandfreie Kommunikation gewährleistet werden kann. Die Strom-FSK-Modulation hat sich als vorteilhaft erwiesen, da damit die Fehlerwahrscheinlichkeit gegenüber anderen Modulationsarten reduziert werden kann. Wie schon vorgängig erwähnt, sind auch andere Modulationsarten möglich, beispielsweise ein Pulslageverfahren, oder ein Einzelpulsverfahren bzw. eine Pulslängenkodierung.

Der Empfänger kann zum Auslesen des Signals aus dem Wechselspannungsnetz einen Shunt umfassen. Dieser Shunt wird von dem Wechselspannungsnetz vom Sender aufgezwungenen strom-FSK-modulierten Strom durchflossen und erzeugt direkt einen entsprechenden Spannungsabfall über dem Shunt. Dieser Spannungsabfall kann einfach verwendet und weiter verarbeitet werden.

Der Empfänger kann nahe am Verteiler angeordnet sein. Mit einer Anordnung des Empfängers nahe am Verteiler und des Senders nahe am Verbraucher, wobei der Sender und Empfänger der selben Verbrauchergruppe zugeordnet sind, kann beispielsweise eine einfache sternförmige Kommunikationsnetzstruktur, insbesondere für den Rückkanal aufgebaut werden. Eine solche sternförmige Kommunikationsnetzstruktur hat den Vorteil, dass jede Verbrauchergruppe bzw. jeder Stromkreis über einen separaten Kommunikationskanal verfügt, welcher getrennt vom Kommunikationskanal einer weiteren Verbrauchergruppe ist. Somit lässt sich die Bandbreite der Datenübertragung im Gesamtsystem vervielfachen.

Um optional ein eventuelles Übersprechen eines Signals vom Sender einer ersten Verbrauchergruppe zum Empfänger einer zweiten Verbrauchergruppe zu unterdrücken, was insbesondere bei einer hohen Quellimpedanz der Versorgerseite möglich ist, kann der Verteiler einen Saugkreis, insbesondere einen ersten und einen zweiten Serienresonanzkreis aufweisen. Dabei weist der erste Serienresonanzkreis vorzugsweise eine Resonanzfrequenz auf, welche der ersten Strom-FSK-Frequenz entspricht. Ein zweiter Serienresonanzkreis weist dann eine Resonanzfrequenz auf, welche der zweiten Strom-FSK-Frequenz entspricht. Ein solcher Saugkreis wird versorgerseitig vor dem Shunt angeordnet und sorgt damit für eine deutlich niedrigere Quellenimpedanz bei den betreffenden FSK-Frequenzen. Somit können beide Strom-FSK-Frequenzen aktiv versorgungsseitig kurzgeschlossen werden und ein Übersprechen in einen weiteren Kommunikationskanal bzw. in eine andere Verbrauchergruppe wird verhindert. Ausserdem wird somit die Empfindlichkeit der Strommessung des Strom-FSK-Signals erhöht, weil dadurch die Quellimpedanz im Frequenzbereich des Senders deutlich reduziert wird und dadurch mehr Spannung am Shunt abfällt. Versuche haben gezeigt, dass an dieser Stelle auch ein einfacher hochspannungsfester Kondensator gut funktioniert. Allerdings erzeugt dieser im System eine erhöhte Blindleistung, da der Kondensator über den gesamten unteren Frequenzbereich wirksam ist. Durch die Verwendung von relativ schmalbandigen Saugkreisen wird die Blindleistung auf einen vernachlässigbaren Wert reduziert.

Ein erfindungsgemässer Sender zur Datenübertragung für Wechselspannungsnetze umfasst eine Stromquelle, insbesondere in Form eines MOS-FETs, zum Aufzwingen eines Laststromes auf eine Wechselspannungsnetz und einen Pulserzeuger, zur Erzeugung eines Signals mit einer vorbestimmten oder vorbestimmbaren Pulsform. Vorzugsweise entspricht dabei die Pulsform einer angenäherten $sin^2$-förmigen oder gaussförmigen Kurve. In einer alternativen Schaltung kann der Sender zusätzlich einen Stromspiegel, zum Ansteuern der Stromquelle mit einem modulierten Stromsignal aufweisen. In beiden Fällen ist der Sender parallel zu einem Verbraucher direkt an ein Wechselspannungsnetz anschliessbar und weist insbesondere keinen Koppeltransformator auf. Dadurch, dass auf jegliche Koppeltransformatoren verzichtet werden kann, kann der Sender sehr kompakt gebaut werden. Ausserdem erlauben diese Schaltungen, die Sendeimpulse mit einem einzigen sehr kleinen Transistor zu erzeugen. Der Sender lässt sich somit sehr leicht auf einem Silizium-Chip integrieren oder kann preisgünstig und kompakt in einer elektronischen Baugruppe mit einem Chip kombiniert werden.

Mit einem erfindungsgemässen Gebäudestromnetz umfassend eine oder mehrere der vorgenannten Anordnungen kann wie schon vorgängig beschrieben eine einfache sternförmige Kommunikationsnetzstruktur aufgebaut werden.

Wenn die vorgenannten Anordnungen für eine bidirektionale Kommunikation erweitert werden und die Anordnungen beispielsweise im Verteiler untereinander und/oder mit einer optionalen zentralen Recheneinheit beispielsweise über einen Datenbus verbunden werden, kann eine komplette sternförmige Kommunikationsnetzstruktur aufgebaut werden.

Ein Verfahren zur Datenübertragung zwischen einem elektrischen Gerät, welches geeignet ist, mittels einer Anschlussleitung an ein Wechselspannungsnetz entsprechend seiner Betriebsspannung angeschlossen zu werden, und einem Empfänger, wobei das Gerät einen Sender mit einer Stromquelle aufweist, umfasst die Schritte:

- Anschliessen des Gerätes mittels der Anschlussleitung an den Empfänger,

- Erzeugen einer Wechselspannung auf der Anschlussleitung zwischen dem Gerät und dem Empfänger durch den Empfänger, wobei die Wechselspannung der Betriebsspannung des Gerätes entspricht,

- Einspeisen eines Signals mittels der Stromquelle in die Anschlussleitung.

Eine solche Vorrichtung erlaubt beispielsweise das Auslesen von Betriebsdaten eines Gerätes, ohne dass das Gerät an ein Wechselspannungsnetz angeschlossen werden muss. Der Empfänger kann dabei vom Wechselspannungsnetz unabhängig, z.B. batteriebetrieben ausgeführt sein.

Anhand von Figuren, welche lediglich Ausführungsbeispiele darstellen, wird die Erfindung im Folgenden näher erläutert. Es zeigen:

Figur 1:     eine schematische Darstellung einer erfindungsgemässen Anordnung in einem Gebäudestromnetz,

Figur 2:     ein vereinfachtes Ersatzschaltbild einer erfindungsgemässen Anordnung mit zwei Verbrauchergruppen,

Figur 3:     das Ersatzschaltbild aus Figur 2, jedoch mit einem modifizierten Verteiler und einer kapazitiven Last,

Figur 4:     ein Frequenzgang der Ströme an beiden Shunts im Cenelec "B" Band aus Figur 3,

Figur 5:     eine Variante eines Doppel-Serienschwingkreises,

Figur 6:     ein Ersatzschaltbild eines erfindungsgemässen Strom-FSK-Senders mit einem Stromspiegel,

Figur 7:     ein Ersatzschaltbild einer alternativen Schaltung eines Strom-FSK-Senders ohne Stromspiegel.

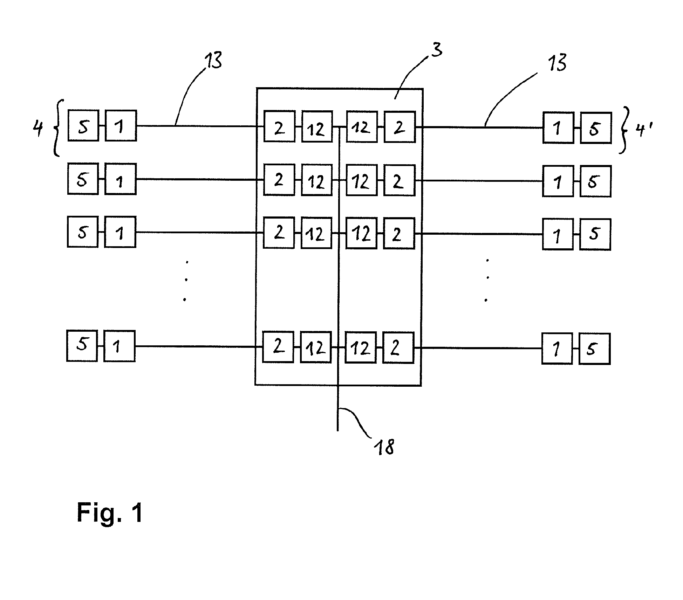

Figur 1 zeigt eine schematische Darstellung einer erfindungsgemässen Anordnung in einem Gebäudestromnetz. Dabei ist an einem Netzzugang 18 ein Verteiler 3 angeschlossen, welcher im Gebäude die Verteilung des Wechselstromes auf die einzelnen Verbrauchergruppen 4, 4' vornimmt. Jede Verbrauchergruppe 4, 4' verfügt über eine Sicherung 12, welche im Störfall eine Trennung der Verbrauchergruppe vom Netz vornimmt. Direkt anschliessend an die Sicherung 12 ist in jeder Verbrauchergruppe 4, 4' ein Empfänger 2 angeordnet, bevor die Netzspannung über eine Leitung 13 an den Verbraucher 5 geliefert wird. Unmittelbar vor dem Verbraucher 5 ist ein Sender 1 angeordnet, welcher dem Wechselspannungsnetz ein Stromsignal aufdrücken kann. Wenn mehrere Verbraucher 5 in derselben Verbrauchergruppe 4, 4' angeschlossen sind, kann jeder Verbraucher über einen eigenen Sender verfügen.

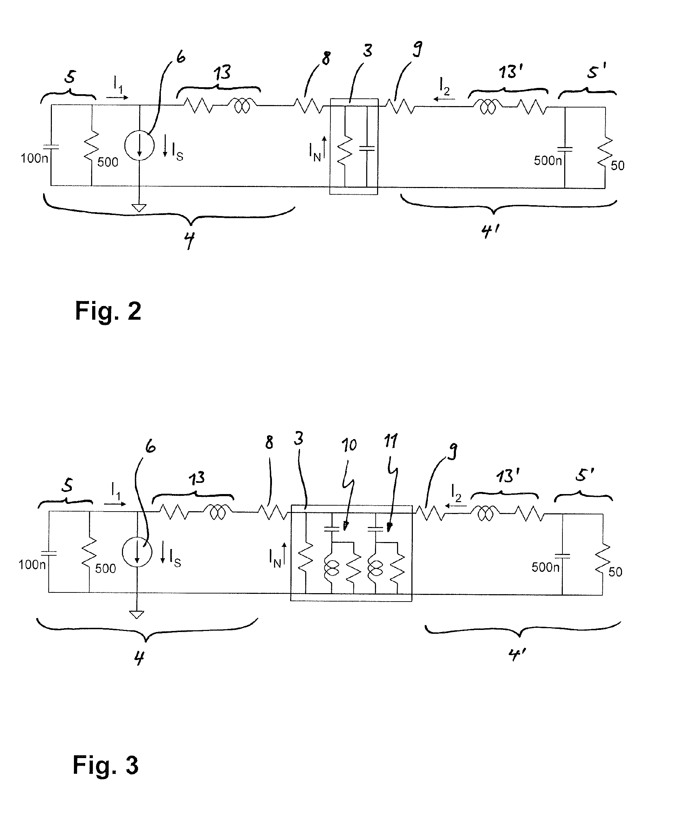

In Figur 2 ist ein vereinfachtes Ersatzschaltbild einer erfindungsgemässen Anordnung mit zwei Verbrauchergruppen 4, 4' und einem Verteiler 3 dargestellt. Die Sicherungen 12 (siehe Figur 1) sind hier nicht eingezeichnet. Entsprechend den Anforderungen der Energieverteilung wird die am Verteiler 3 messbare Netzimpedanz durch einen kleinen Widerstand dargestellt. Wegen der unvermeidlichen Leitungsinduktivitäten zeigt Figur 2 zusätzlich eine Spule in Reihe mit diesem Widerstand, was im Bereich der Strom-FSK-Sendefrequenzen zu einer deutlich größeren Quellimpedanz des Netzes führt.

Dabei wird der Verbraucher 5 der Verbrauchergruppe 4 beispielsweise durch einen Widerstand von 500Ω und eine Kapazität von 100nF nachgebildet. Ein solches Verbrauchermodell entspricht in etwa einer Glühbirne und einem Gerät mit einem Funkentstörkondensator. Der Verbraucher 5' der benachbarten Verbrauchergruppe 4' wird beispielsweise mit 50Ω und 500nF modelliert. Das entspricht dem durchaus realistischen Fall mehrerer eingeschalteter Glühlampen und mehreren Geräten mit Funkentstörkondensatoren.

Die Zuleitung vom Verteiler 3 zum Verbraucher 5, 5' wird durch das Ersatzschaltbild einer Leitung 13, 13' dargestellt. Für eine 20m Leitung entspricht dies in etwa einem Widerstand von $0.7\Omega$ und einer Induktivität von $8\mu H$. Anschliessend an den Verteiler 3 ist in jeder Verbrauchergruppe ein Shunt 8, 9 dargestellt, welcher den Empfänger darstellt. Ein solcher Shunt 8, 9 weist beispielsweise einen Widerstandswert von $0.1\Omega$ auf. Zur Einspeisung eines Signals ist beim Verbraucher 5 eine Stromquelle 6 angeordnet, welche einen Sendestrom $I_S$ mit einem Spitzenwert von ca. 200mA liefert. Diese Stromquelle 6 ist Teil des Senders, welcher ein strom-FSK-moduliertes Stromsignal auf die Leitung 13 aufdrückt. Dieses Stromsignal wird dann vom Shunt 8 des Empfängers detektiert und in eine entsprechende Spannung gewandelt.

Figur 2 zeigt auch die Aufteilung des Sendestroms $I_S$. Unvermeidlich wird ein Teil $I_1$, der nicht über den Shunt 8 des Empfängers fließt, bereits vom eigenen Verbraucher aufgenommen. Der über das Netz fließende Strom IN durchläuft den eigenen Shunt 8. Der in die benachbarte Verbrauchergruppe 4' fließende Strom $I_2$ durchläuft zwar auch den eigenen Shunt 8 aber auch den Shunt 9 der benachbarten Verbrauchergruppe 4'. Da diese Verbrauchergruppe als stark belastet dargestellt wurde und beispielsweise mehrere Lampen und mehrere Funkentstörkondensatoren aufweist, ist der Strom $I_2$ nicht zu vernachlässigen und führt zu unerwünschtem Übersprechen. Dabei gilt:

$$I_S \; = \; I_1 \; + \; I_N \; + \; I_2$$

In Figur 3 sind am Ort des Verteilers zwei Serienresonanzschwingkreise 10 und 11 angebracht. Diese Schwingkreise sind auf die beiden Strom-FSK-Frequenzen abgestimmt. Bei sorgfältiger Bauteileauswahl zur Erzielung hoher Güte verhalten sich die Serienresonanzschwingkreise fast wie Kurzschlüsse bei den Sendefrequenzen. Dadurch sind die Impedanzen von Netz und Verbrauchergruppen nahezu vernachlässigbar. Bei den meist kleinen Leitungsimpedanzen 13 und 13' gilt dann für die Stromaufteilung näherungsweise:

$I_N \approx I_S$ Der über das Netz und den Shunt 8 fließende Strom ist fast so groß wie der Sendestrom.

$I_1 \approx 0$ Der vom Verbraucher 5 selbst absorbierte Strom ist vernachlässigbar.

$I_2 \approx 0$ Der in den Nachbarkreis 4' eindringende Strom ist vernachlässigbar. Damit ist Übersprechen unterbunden.

Bei Strom-FSK-Frequenzen von 100kHz bzw. 110kHz können die Serienresonanzkreise durch je eine Kapazität von 470nF und eine Induktivität von 4.45$\mu$H bzw. von 5.4$\mu$H gebildet werden.

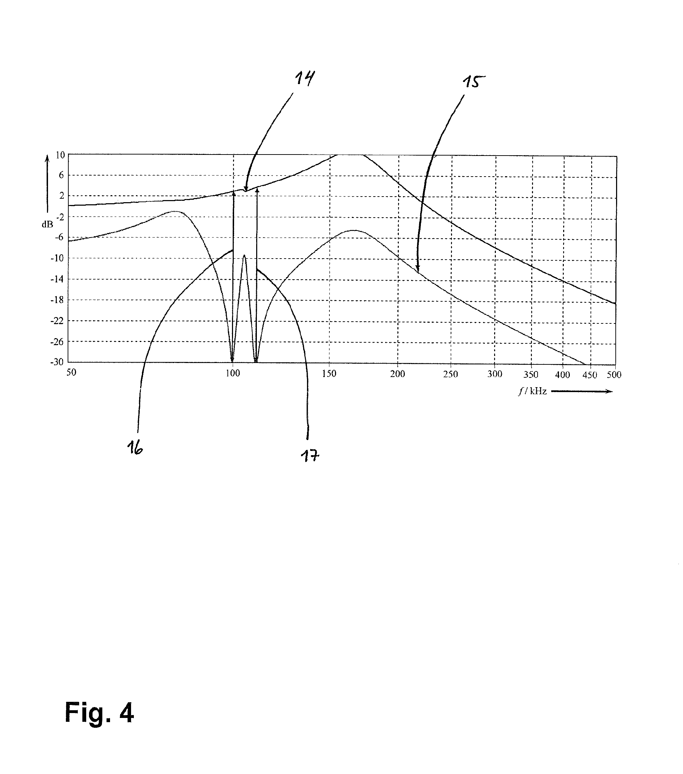

In Figur 4 ist ein Frequenzgang der Ströme an beiden Shunts 8, 9 dargestellt. Dabei stellt der Frequenzgang 14 den Strom im Shunt 8 (siehe Figur 3) und der Frequenzgang 15 den Strom im Shunt 9 (siehe Figur 3) dar. Ebenfalls eingezeichnet sind die beiden Strom-FSK-Frequenzen 16 und 17, welche bei 100kHz bzw. bei 110kHz liegen. Das kurzschluss-ähnliche Verhalten der Serienresonanzschwingkreise bei den Sendefrequenzen ist hier an den spitz zu stark negativen verlaufenden Werten klar erkennbar.

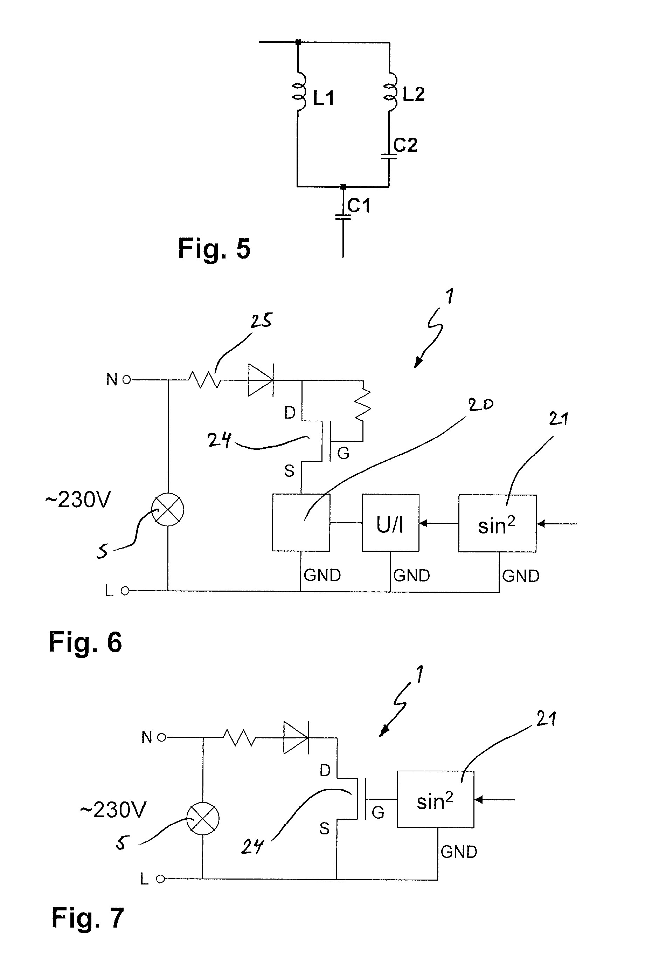

Figur 5 zeigt eine Variante eines Doppel-Serienschwingkreises, bei dem zur Erzielung geringer Bauteilabmessungen nur ein großer Hochvoltkondensator C1 erforderlich ist. Damit sinkt auch der bei der Netzfrequenz entstehende Blindstrom. Der Frequenzgang dieser Schaltung stimmt qualitativ mit Figur 4 überein, er zeigt ebenfalls zwei scharfe Minima bei den Sendefrequenzen. Der Kondensator C2 kann für weitaus niedrigere Spitzenspannungen dimensioniert werden und behält eine kleine Größe. Diese Schaltungsvariante eignet sich für niedrige Sendefrequenzen, bei denen die Strom-FSK-Frequenzen relativ weit auseinander liegen. Anderenfalls ergeben sich bei der Dimensionierungsberechnung unpraktikable Werte für C2 und L2.

Figur 6 zeigt schematisch ein Ersatzschaltbild eines erfindungsgemässen Strom-FSK-Senders 1 mit einem Stromspiegel 20. Dabei ist der Sender 1 parallel zu einem Verbraucher 5, dargestellt durch eine Glühlampe, an das Wechselspannungsnetz, dargestellt durch die beiden ~230V Anschlüsse, angeschlossen. Ausgehend von einem Signal eines Datenkommunikationsausgangs wird durch einen Pulserzeuger 21 ein Sin$^2$-Signal erzeugt, welches dann dem Stromspiegel 20 weitergeleitet wird. Dieser Stromspiegel 20 drückt jetzt ein von einem Strom-FSK-Modulator (nicht gezeigt) entsprechend moduliertes Strom-Signal dem Wechselspannungsnetz über den MOS-FET 24 auf. Ein optionaler Widerstand 25 dient der Strombegrenzung.

Figur 7 zeigt schematisch ein Ersatzschaltbild einer alternativen Schaltung eines erfindungsgemässen Strom-FSK-Senders 1 ohne Stromspiegel. Auch hier ist der Sender 1 parallel zu einem Verbraucher 5, dargestellt durch eine Glühlampe, an das Wechselspannungsnetz, dargestellt durch die beiden ~230V Anschlüsse, angeschlossen. Ausgehend vom FSK Signal eines Datenkommunikationsausgangs wird durch einen Pulserzeuger 21 ein Sin$^2$-Signal erzeugt, welches dann an den Leistungstransistor 24 weitergeleitet wird.

Es versteht sich von selbst, dass anstelle des Strom-FSK-Modulators sowohl in der Schaltung gemäss Figur 6 als auch in der Schaltung gemäss Figur 7 auch ein Modulator für andere Modulationsverfahren eingesetzt werden kann, beispielsweise für ein Pulslageverfahren oder eine Einzelpulsverfahren bzw. eine Pulslängenkodierung.

**Patentansprüche**

1. Verfahren zur Übertragung eines Datensignals von einem Sender (1) zu einem Empfänger (2) in einem Wechselspannungsnetz mit einem Verteiler (3) und mindestens einer Verbrauchergruppe (4) mit einem oder mehreren Verbrauchern (5), wobei der Sender (1) eine Stromquelle (6) und einen Pulserzeuger (21) aufweist, wobei der Pulserzeuger (21) ausgehend vom Datensignal ein Signal mit einer vorbestimmten oder vorbestimmbaren Pulsform erzeugt und an die Stromquelle (6) weiterleitet, wobei der Sender (1) parallel zu einem Verbraucher (5) direkt an ein Wechselspannungsnetz angeschlossen ist und insbesondere keinen Koppeltransformator aufweist, wobei der Sender (1) mittels der Stromquelle (6) dem Wechselspannungsnetz das Signal einspeist.

2. Verfahren nach Anspruch 1, **dadurch gekennzeichnet, dass** durch die Stromquelle (6) ein zusätzlicher Verbraucher simuliert wird.

3. Verfahren nach einem der vorhergehenden Ansprüche, **dadurch gekennzeichnet, dass** das Signal strom-FSK-moduliert wird.

4. Verfahren nach einem der vorhergehenden Ansprüche, **dadurch gekennzeichnet, dass** das Signal im Verbraucher (5) oder in einem Bereich bis zu 50 cm vom Verbraucher (5) eingespeist wird.

5. Verfahren nach einem der vorhergehenden Ansprüche, **dadurch gekennzeichnet, dass** das Signal in einem Bereich bis zu 50 cm vom Verteiler (3) ausgelesen wird.

6. Anordnung zur Übertragung eines Datensignals für Wechselspannungsnetze, umfassend

   - ein Wechselspannungsnetz mit einem Verteiler (3) und mindestens einer Verbrauchergruppe (4) mit einem oder mehreren Verbrauchern (5),
   - mindestens einen Sender (1),
   - einen Empfänger (2),
   wobei der Sender (1) eine Stromquelle (6) zur Einspeisung eines Signals in das Wechselspannungsnetz und einen Pulserzeuger (21) zur Erzeugung eines an die Stromquelle (6) weiterzuleitenden Signals mit einer vorbestimmten oder vorbestimmbaren Pulsform ausgehend aus dem zu übertragenden Datensignals umfasst, wobei der Sender (1) parallel zu einem Verbraucher (5) direkt an das Wechselspannungsnetz anschliessbar ist und insbesondere keinen Koppeltransformator aufweist.

7. Anordnung nach Anspruch 6, **dadurch gekennzeichnet, dass** der Sender (1) im Verbraucher (5) integriert oder in einem Bereich bis zu 50 cm vom Verbraucher (5) angeordnet ist.

8. Anordnung nach Anspruch 6 oder 7, **dadurch gekennzeichnet, dass** der Sender (1) einen Strom-FSK-Modulator umfasst.

9. Anordnung nach einem der Ansprüche 6 bis 8, **dadurch gekennzeichnet, dass** der Verteiler (3) einen Saugkreis, insbesondere einen ersten und einen zweiten Serienresonanzkreis (10, 11) zur Unterdrückung von Übersprechen des Signals 7 vom Sender (1) einer ersten Verbrauchergruppe (4) zum Empfänger (2) einer zweiten Verbrauchergruppe (4') aufweist.

10. Anordnung nach Anspruch 9, **dadurch gekennzeichnet, dass** der erste Serienresonanzkreis (10) eine Resonanzfrequenz aufweist, welche der ersten Strom-FSK-Frequenz entspricht.

11. Anordnung nach Anspruch 9 oder 10, **dadurch gekennzeichnet, dass** der zweite Serienresonanzkreis (11) eine Resonanzfrequenz aufweist, welche der zweiten Strom-FSK-Frequenz entspricht.

12. Sender (1) zur Übertragung eines Datensignals für Wechselspannungsnetze umfassend:

 - eine Stromquelle (6), insbesondere einen MOS-FET (24), zum Aufzwingen eines Laststromes auf ein Wechselspannungsnetz,
 - einen Pulserzeuger (21), zur Erzeugung eines an die Stromquelle (6) weiterzuleitenden Signales mit einer vorbestimmten oder vorbestimmbaren Pulsform ausgehend aus dem zu übertragenden Datensignal,
 wobei der Sender (1) parallel zu einem Verbraucher (5) direkt an ein Wechselspannungsnetz anschliessbar ist und insbesondere keinen Koppeltransformator aufweist, um mittels der Stromquelle (6) dem Wechselspannungsnetz das Signal einzuspeisen.

13. Sender (1) gemäss Anspruch 12, **dadurch gekennzeichnet, dass** der Sender zusätzlich einen Stromspiegel (20), zum Ansteuern Stromquelle (6) mit einem modulierten Stromsignal, umfasst.

14. Gebäudestromnetz umfassend eine oder mehrere Anordnungen nach einem der Ansprüche 6 bis 11.

15. Verfahren zur Übertragung eines Datensignals zwischen einem elektrischen Gerät, welches geeignet ist, mittels einer Anschlussleitung an ein Wechselspannungsnetz entsprechend seiner Betriebsspannung angeschlossen zu werden, und einem Empfänger (2), wobei das Gerät einen Sender (1) zur Übertragung eines Datensignals für Wechselspannungsnetze umfassend:

 - eine Stromquelle (6), insbesondere einen MOS-FET (24), zum Aufzwingen eines Laststromes auf ein Wechselspannungsnetz,
 - einen Pulserzeuger (21), zur Erzeugung eines an die Stromquelle (6) weitergeleiteten Signales mit einer vorbestimmten oder vorbestimmbaren Pulsform ausgehend aus dem zu übertragenden Datensignal,
 aufweist,
 wobei der Sender (1) parallel zu einem Verbraucher (5) direkt an ein Wechselspannungsnetz anschliessbar ist und insbesondere keinen Koppeltransformator aufweist, um mittels der Stromquelle (6) dem Wechselspannungsnetz das Signal einzuspeisen,
 umfassend die Schritte:
 - Anschliessen des Gerätes (1) mittels der Anschlussleitung an den Empfänger (2),
 - Erzeugen einer Wechselspannung auf der Anschlussleitung zwischen dem Gerät (1) und dem Empfänger (2) durch den Empfänger (2), wobei die Wechselspannung der Betriebsspannung des Gerätes entspricht,
 - Einspeisen des Signales mittels der Stromquelle (6) in die Anschlussleitung.

## Claims

1. Method for transmitting a data signal from a transmitter (1) to a receiver (2) in an AC voltage system having a distributor (3) and at least one load group (4) with one or more loads (5), the transmitter (1) having a current source (6) and a pulse generator (21), the pulse generator (21) generating a signal with a predetermined or predeterminable pulse shape on the basis of the data signal and forwarding it to the current source (6), the transmitter (1) being directly connected to an AC voltage system in parallel with a load (5) and having, in particular, no coupling transformer, the transmitter (1) using the current source (6) to supply the signal to the AC voltage system.

2. Method according to Claim 1, **characterized in that** the current source (6) simulates an additional load.

3. Method according to one of the preceding claims, **characterized in that** the signal is subjected to current FSK modulation.

4. Method according to one of the preceding claims, **characterized in that** the signal is supplied in the load (5) or in a range of up to 50 cm from the load (5).

5. Method according to one of the preceding claims, **characterized in that** the signal is read out in a range of up to 50 cm from the distributor (3).

6. Arrangement for transmitting a data signal for AC voltage systems, comprising

   - an AC voltage system having a distributor (3) and at least one load group (4) with one or more loads (5),
   - at least one transmitter (1),
   - a receiver (2),
   the transmitter (1) comprising a current source (6) for supplying a signal to the AC voltage system and a pulse generator (21) for generating a signal which is to be forwarded to the current source (6) and has a predetermined or predeterminable pulse shape on the basis of the data signal to be transmitted, the transmitter (1) being able to be directly connected to the AC voltage system in parallel with a load (5) and having, in particular, no coupling transformer.

7. Arrangement according to Claim 6, **characterized in that** the transmitter (1) is integrated in the load (5) or is arranged in a range of up to 50 cm from the load (5).

8. Arrangement according to Claim 6 or 7, **characterized in that** the transmitter (1) comprises a current FSK modulator.

9. Arrangement according to one of Claims 6 to 8, **characterized in that** the distributor (3) has a series resonant circuit, in particular a first and a second series resonant circuit (10, 11) for suppressing crosstalk of the signal from the transmitter (1) in a first load group (4) to the receiver (2) in a second load group (4').

10. Arrangement according to Claim 9, **characterized in that** the first series resonant circuit (10) has a resonant frequency corresponding to the first current FSK frequency.

11. Arrangement according to Claim 9 or 10, **characterized in that** the second series resonant circuit (11) has a resonant frequency corresponding to the second current FSK frequency.

12. Transmitter (1) for transmitting a data signal for AC voltage systems, comprising:

   - a current source (6), in particular a MOSFET (24), for imposing a load current on an AC voltage system,
   - a pulse generator (21) for generating a signal which is to be forwarded to the current source (6) and has a predetermined or predeterminable pulse shape on the basis of the data signal to be transmitted,
   the transmitter (1) being able to be directly connected to an AC voltage system in parallel with a load (5) and having, in particular, no coupling transformer in order to use the current source (6) to supply the signal to the AC voltage system.

13. Transmitter (1) according to Claim 12, **characterized in that** the transmitter additionally comprises a current mirror (20) for controlling the current source (6) with a modulated current signal.

14. Building power supply system comprising one or more arrangements according to one of Claims 6 to 11.

15. Method for transmitting a data signal between an electrical device, which is suitable for being connected to an AC voltage system by means of a connecting line in accordance with its operating voltage, and a receiver (2), the device having a transmitter (1) for transmitting a data signal for AC voltage systems, comprising:

   - a current source (6), in particular a MOSFET (24), for imposing a load current on an AC voltage system,
   - a pulse generator (21) for generating a signal which is forwarded to the current source (6) and has a predetermined or predeterminable pulse shape on the basis of the data signal to be transmitted,

   the transmitter (1) being able to be directly connected to an AC voltage system in parallel with a load (5) and having, in particular, no coupling transformer in order to use the current source (6) to supply the signal to the AC voltage system,
   comprising the steps of:

   - connecting the device (1) to the receiver (2) by means of the connecting line,
   - generating an AC voltage on the connecting line between the device (1) and the receiver (2) by means of the receiver (2), the AC voltage corresponding to the operating voltage of the device,
   - using the current source (6) to supply the signal to the connecting line.

**Revendications**

1. Procédé de transmission d'un signal de données d'un émetteur (1) vers un récepteur (2) dans un réseau de tension alternative comprenant un tableau de distribution (3) et au moins un groupe de consommateurs (4) incluant un ou plusieurs consommateurs (5), l'émetteur (1) possédant une source de courant (6) et un générateur d'impulsions (21), le générateur d'impulsions (21) générant, à partir du signal de données, un signal ayant une forme impulsionnelle prédéfinie ou pouvant être prédéfinie et le transférant à la source de courant (6), l'émetteur (1) étant raccordé en parallèle avec un consommateur (5) directement à un réseau de tension alternative et ne possédant notamment aucun transformateur de couplage, l'émetteur (1) injectant le signal dans le réseau de tension alternative au moyen de la source de courant (6).

2. Procédé selon la revendication 1, **caractérisé en ce qu'**un consommateur supplémentaire est simulé par la source de courant (6).

3. Procédé selon l'une des revendications précédentes, **caractérisé en ce que** le signal est modulé par déplacement de fréquence-courant.

4. Procédé selon l'une des revendications précédentes, **caractérisé en ce que** le signal est injecté dans le consommateur (5) ou dans une zone jusqu'à 50 cm du consommateur (5).

5. Procédé selon l'une des revendications précédentes, **caractérisé en ce que** le signal est lu dans une zone jusqu'à 50 cm du tableau de distribution (3).

6. Arrangement de transmission d'un signal de données pour réseaux de tension alternative, comprenant

    - un réseau de tension alternative comprenant un tableau de distribution (3) et au moins un groupe de consommateurs (4) incluant un ou plusieurs consommateurs (5),
    - au moins un émetteur (1),
    - un récepteur (2),
    l'émetteur (1) possédant une source de courant (6) destinée à injecter un signal dans le réseau de tension alternative et un générateur d'impulsions (21) destiné à générer, à partir du signal de données à transmettre, un signal à transférer à la source de courant (6) ayant une forme impulsionnelle prédéfinie ou pouvant être prédéfinie, l'émetteur (1) pouvant être raccordé en parallèle avec un consommateur (5) directement au réseau de tension alternative et ne possédant notamment aucun transformateur de couplage.

7. Arrangement selon la revendication 6, **caractérisé en ce que** l'émetteur (1) est intégré dans le consommateur (5) ou disposé dans une zone jusqu'à 50 cm du consommateur (5).

8. Arrangement selon la revendication 6 ou 7, **caractérisé en ce que** l'émetteur (1) comprend un modulateur à déplacement de fréquence-courant.

9. Arrangement selon l'une des revendications 6 à 8, **caractérisé en ce que** le tableau de distribution (3) possède un circuit d'absorption, notamment un premier et un deuxième circuits résonants série (10, 11) destinés à inhiber une diaphonie du signal (7) de l'émetteur (1) d'un premier groupe de consommateurs (4) vers le récepteur (2) d'un deuxième groupe de consommateurs (4').

10. Arrangement selon la revendication 9, **caractérisé en ce que** le premier circuit résonant série (10) présente une fréquence de résonance qui correspond à la première fréquence de modulation par déplacement de fréquence-courant.

11. Arrangement selon la revendication 9 ou 10, **caractérisé en ce que** le deuxième circuit résonant série (11) présente une fréquence de résonance qui correspond à la deuxième fréquence de modulation par déplacement de fréquence-courant.

12. Émetteur (1) destiné à la transmission d'un signal de données pour réseaux de tension alternative, comprenant

    - une source de courant (6), notamment un MOSFET (24), servant à imposer un courant de charge sur un réseau de tension alternative,
    - un générateur d'impulsions (21) destiné à générer, à partir du signal de données à transmettre, un signal à transférer à la source de courant (6) ayant une forme impulsionnelle prédéfinie ou pouvant être prédéfinie, l'émetteur (1) pouvant être raccordé en parallèle avec un consommateur (5) directement à un réseau de tension alternative et ne possédant notamment aucun transformateur de couplage afin d'injecter le signal dans le réseau de tension alternative au moyen de la source de tension (6).

13. Émetteur (1) selon la revendication 12, **caractérisé en ce que** l'émetteur comprend en plus un miroir de courant (20) destiné à commander la source de courant (6) avec un signal de courant modulé.

14. Réseau électrique d'immeuble comprenant un ou plusieurs arrangements selon l'une des revendications 6 à 11.

**15.** Procédé de transmission d'un signal de données entre un appareil électrique, lequel est conçu pour être raccordé au moyens d'un câble de raccordement à un réseau de tension alternative correspondant à sa tension de service, et un récepteur (2), l'appareil possédant un émetteur (1) servant à la transmission d'un signal de données pour réseaux de tension alternative, comprenant :

- une source de courant (6), notamment un MOSFET (24), servant à imposer un courant de charge sur un réseau de tension alternative,
- un générateur d'impulsions (21) destiné à générer, à partir du signal de données à transmettre, un signal transmis à la source de courant (6) ayant une forme impulsionnelle prédéfinie ou pouvant être prédéfinie, l'émetteur (1) pouvant être raccordé en parallèle avec un consommateur (5) directement à un réseau de tension alternative et ne possédant notamment aucun transformateur de couplage afin d'injecter le signal dans le réseau de tension alternative au moyen de la source de tension (6),

comprenant les étapes suivantes :

- raccordement de l'appareil (1) au récepteur (2) au moyen du câble de raccordement,
- génération d'une tension alternative sur le câble de raccordement entre l'appareil (1) et le récepteur (2) par le récepteur (2), la tension alternative correspondant à la tension de service de l'appareil,
- injection du signal dans le câble de raccordement au moyen de la source de courant (6).

**Fig. 1**

Fig. 2

Fig. 3

Fig. 4

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5491463 A
- EP 1134910 A2
- WO 2006034866 A1
- EP 1675274 A1